(19) Europäisches Patentamt

European Patent Office

Office européen des brevets

(11) EP 2 575 401 B1

(12) **EUROPEAN PATENT SPECIFICATION**

(45) Date of publication and mention
of the grant of the patent:
**24.09.2014 Bulletin 2014/39**

(51) Int Cl.:
*H04W 52/40* (2009.01)     *H04W 52/50* (2009.01)

(21) Application number: **11360044.9**

(22) Date of filing: **30.09.2011**

(54) **Transmit power control**

Übertragungsleistungssteuerung

Contrôle de la puissance de transmission

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.04.2013 Bulletin 2013/14**

(73) Proprietor: **ALCATEL LUCENT
92100 Boulogne-Billancourt (FR)**

(72) Inventor: **Wong, Shin Horng
Chippenham, Wiltshire SN14 0SP (GB)**

(74) Representative: **Sarup, David Alexander
Alcatel-Lucent Telecom Ltd
Intellectual Property Business Group
Christchurch Way
Greenwich
London SE10 0AG (GB)**

(56) References cited:
**EP-A1- 1 777 840     WO-A1-2009/113934**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a method of selecting user equipment transmit power, user equipment operable to carry out that method and a computer program product operable to carry out that method.

BACKGROUND

Wireless telecommunications systems are known. In a cellular system, radio coverage is provided to user equipment; for example, mobile telephones, in areas known as cells. A base station is located in each cell to provide radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

The widespread popularity of smartphones has caused a significant change to data traffic profiles carried in known telecommunications networks. The data traffic profile of user equipment is becoming increasingly discontinuous or "bursty" and traditional power control algorithms and transmission mode methods, designed primarily for continuous data transmission, may not aid overall network operation or may be unsuitable for such a change to a typical data traffic profile.

WO 2009/113934 describes methods and arrangements for controlling uplink transmit power of user equipment operating in a multi-carrier HSPA system using transmit power control (TPC) commands. In soft handover several radio base stations transmit TPC commands to a single user equipment, so the user equipment needs to operate to combine the different multi-carrier symmetries with multiple downlink carriers and/or multiple uplink carriers for a given user equipment, and a means to control uplink transmit power is described which can be used regardless of multi-carrier symmetry and the frequency bands used by the different carriers. Each base station defines at least one TPC command for adjustment of the transmit power of N uplink carriers, the number of TPC commands being equal to or lower than N, and the base station transmits the TPC command(s) to each user equipment on at least one of M downlink carriers. The user equipment receives the TPC command(s) and adjusts the transmit power of the N uplink carriers based on the received TPC commands.

Accordingly, it is desired to provide an improved technique for controlling user equipment transmit power in a wireless communications network.

SUMMARY

A first aspect provides a method of selecting user equipment transmit power on a common uplink channel in a wireless telecommunications network to enable implementation of soft handover techniques in a user equipment cell-FACH state, the common uplink channel being operable to support data traffic communication between the user equipment and at least one of a plurality of network access nodes; the method comprising:

determining a set of the plurality of network access nodes with which communication can be established; calculating, based on received broadcast signals from network access nodes in the set, an indication of necessary user equipment transmit power for data traffic communication between the user equipment and each network access node in the set; and selecting, based on the calculated indication of necessary user equipment transmit power for data traffic communication between the user equipment and each network access node in the set, a user equipment transmit power which corresponds to a largest value of the calculated indications.

The widespread popularity of "smartphones" in commercial networks has led to a change in typical data traffic profile carried on data carriers. The loading of web pages and subsequent user reading, for example, has led to a data traffic profile which has become substantially discontinuous or bursty, and traditional power control algorithms designed primarily for continuous data transmission may not offer a particularly efficient power control regime. This can lead to network resource overuse and the draining of user equipment power sources. In particular, in a UMTS radio network, for example, utilisation of power control algorithms designed for continuous data transmission may result in a waste of available user equipment power and cause unnecessary interference to other users when a channel carrying data is inactive and a signal to interference ratio target according to continuous data transmission regimes is set particularly high due to the latest data transmissions.

User equipment may operate in various modes in, for example, a UMTS telecommunications network. On initial turning on of user equipment in a cell, it will typically operate in "idle mode". Once it synchronises and attaches itself to a base station, it gains radio resource control (RRC) connection and is referred to as being in a connected mode. User equipment in idle mode does not have a radio resource control connection. If user equipment is RRC connected it can be in one of five different RRC states: Cell_DCH, Cell_FACH, Enhanced Cell_FACH, Cell_PCH, or URA_PCH states.

User equipment typically moves into Cell_DCH state when its data traffic is high, since in such a state the user equipment is allocated a dedicated channel on which to transmit and receive data from a base station. In a UMTS network architecture, user equipment can be in Cell_DCH state when it is expected to have a high volume of traffic. Operation in a Cell_DCH state is typically highly demanding of battery power. User equipment may be operable, when not in a Cell_DCH state, to use a random access channel (RACH) on the uplink and a base station will operate to communicate with user equipment using a forward access channel (FACH). RACH and FACH have typically a small data carrying ability and in WCDMA or UMTS systems a capability for user equipment and base stations to operate and communicate data traffic therebetween using a shared or common resource on downlink and uplink when user equipment is in a Cell_FACH state has been introduced.

In the uplink the data traffic transmission occurs using an enhanced dedicated channel and in the downlink it is sent on a high-speed downlink shared channel. Such channels allow user equipment and base stations to communicate and to transmit longer and larger data packets between themselves for a time without the need for user equipment to enter a Cell_DCH state. Such arrangements allow user equipment to remain in a Cell_FACH state for longer without transitioning to more dedicated RRC states, thereby allowing a power consumption saving.

It will be appreciated that for data traffic which is particularly bursty in nature, operation in a full Cell_DCH state may be particularly wasteful of battery at the user equipment and also of available radio resource, thus the ability to handle bursty traffic without entering a more dedicated state may be beneficial to overall network operation.

It will be appreciated that implementation of soft handover techniques in a user equipment Cell_FACH state can improve overall network operation, but user equipment transmitting at a very high a power to try and maximise the number of base stations available for soft handover techniques may itself be operating inefficiently by draining its own power source or by causing unnecessary interference to cells supported by other, non-serving, base stations.

The first aspect recognises that by selecting user equipment transmit power in relation to a number of base stations (or network access nodes), compromise between transmit power at user equipment and reaching sufficient base stations to implement soft handover techniques in user equipment Cell_FACH state may be efficiently determined.

User equipment operable in an overlap region suitable for implementation of soft handover techniques is operable to select a common soft handover E-DCH resource and send a preamble to its serving cell. The user equipment may determine it is in a potential soft handover region by making appropriate measurements of transmissions made by each base station and determining, for example, that they lie within a particular threshold value of one another.

If implementing soft handover techniques, each common soft handover E-DCH resource may correspond to a unique preamble signature. A neighbouring cell participating in Cell_FACH soft handover is also operable to be looking for such preambles transmitted by user equipment.

However, user equipment operating in a Cell_FACH state has its transmit power determined only by its serving cell. That is to say, the transmit power of user equipment is such that transmissions successfully reach the serving cell and no account is necessarily made of whether the user equipment transmissions reach any other base stations and therefore whether any other base stations may be operable and contribute to soft handover techniques. It will be appreciated that, ideally, user equipment would be operable to take account of the possibility of use of soft handover techniques whilst operating in a Cell_FACH state and determine a suitable preamble transmission power on which to transmit information on common soft handover E-DCH resources.

The first aspect recognises that, when operating in Cell_FACH, user equipment must compete for a common channel on which to transmit data traffic. Furthermore, the user equipment must request allocation of that shared channel in order to transmit data. Those shared common channels are duplicated across the network and, as such, are supported by each network access node across the network. An example of such a shared channel is, for example E-DCH. When intending to transmit data in a Cell_FACH state, user equipment requests permission to transmit data on a shared channel by initialising a preamble procedure with a base station to determine the power on which to transmit the data traffic. That preamble procedure may comprise an initial transmission to a base station at a predetermined power. If no response is received, the user equipment increases its transmit power by a predetermined increment (for a predetermined number of repetitions) until a response is received, indicating that the base station has received the preamble, and (if a positive AICH message is received at the user equipment) indicating that the request for a common channel has been successful. Having determined a transmit power, the user equipment is then operable to transmit a burst of data traffic on the allocated common channel.

The first aspect recognises that rather than setting data traffic transmit power in relation to a preamble procedure carried out with a single base station (typically the serving base station), the user equipment may advantageously take account of what transmit power it may need to reach more distant base stations. If more distant base stations can be reached by a transmission made by the user equipment, soft handover techniques may be used to increase overall network data throughput and efficiency.

It will be appreciated that the method of the first aspect may be used when user equipment is in a cell overlap region, and is likely to be able to reach more than a single base station. The method may only be implemented when user equipment determines, based on measurements of signals received from base stations, that it is likely to be in an overlap region between at least two cells, supported by at least one base station.

In one embodiment, the method further comprises: determining which of the plurality of network access nodes acts as a serving cell for the user equipment; and selecting the user equipment transmit power which corresponds to a largest value based on the calculated indications for those calculated values which belong to the network access nodes determined to differ from the calculated indication of transmit power belonging to said network access node determined to be the serving cell by less than a predetermined threshold. It will be understood that such an arrangement limits user equipment transmit power and prevents the user equipment from trying to reach potentially participating cells supported by base stations which are too far away. If a cell is too far away, user equipment transmissions occurring on a Cell_FACH shared or common channel are likely to cause little interference to such a distant cell.

In one embodiment, the method comprises: determining which of the plurality of network access nodes are neighbour cells to a network access node which acts as a serving cell to the user equipment; selecting the user equipment transmit power which corresponds to a largest value of the calculated indications for those calculated indication values which belong to the network access nodes determined to be neighbour cells to the network access node which acts as a serving cell to the user equipment. Accordingly, the user equipment may limit the transmit power values to those associated with close base stations, thus limiting likely interference within the network, but maximising the chance that soft handover techniques may be used whilst the user equipment operates in a cell_FACH state.

In one embodiment, the method comprises determining which of the plurality of network nodes are neighbour cells to the network access node which acts as a serving cell to the user equipment by: calculating an indication of path loss between the user equipment and the serving cell; calculating an indication of path loss between the user equipment and each other network access node; and classifying those network access nodes which differ in path loss from the calculated serving cell path loss by less than a predetermined threshold as neighbour cells. Accordingly, it is possible to configure the degree of neighbours for which user equipment may calculate a transmit power and thus the extent to which soft handover techniques are to be generally used by the network. It will be appreciated that a cell which lies outside that path loss difference is likely to be further away from the user equipment and, thus, be unlikely to benefit from a soft handover operation whilst the user equipment is in a Cell_FACH state.

According to one embodiment, the method further comprises: receiving an indication of a plurality of network nodes with which it may be possible for the user equipment to establish communication. Accordingly an RNC or base station within the network may provide user equipment with an indication, for example, a likely active set of base stations, with which it may be theoretically possible to establish a communication link. Determination may then be made by the user equipment, by use of preamble techniques, regarding whether an effective communication link may actually be established.

According to one embodiment, the method may further comprise: determining a set of said plurality of network access nodes with which communication can be established by: transmitting a request to commence communication on a predetermined common uplink channel to each of the plurality of network access nodes and awaiting a positive indication that communication may be established with that network access node on the predetermined common uplink channel. Initial transmission power at user equipment operating in Cell_FACH or other random access channel states is set using open loop power control. That open loop power control process sets a first preamble transmission power for transmission to a serving cell in accordance with techniques described in relation to specific embodiments.

In one embodiment, the method further comprises: awaiting a positive indication that communication may be established with at least one of the plurality of network access nodes before selecting user equipment transmit power. Accordingly, the user equipment may only decide a transmit power if it has been successfully allocated a common channel on which to transmit by at least one of the plurality of network access nodes.

According to one embodiment, the method further comprises: awaiting a positive indication from a predetermined sub-set of the plurality of network access nodes before selecting user equipment transmit power, the predetermined sub-set being selected on the basis of a predetermined threshold of calculated indication of distance to said each network access node from the user equipment, based upon transmissions made by each network access node received at the user equipment. According to such a further embodiment, the set of cells placed in the sub set for which the user equipment requires a positive indication that transmissions may occur are chosen to be cells which are very close to a user equipment serving cell. Those cells may be described as having high interference (that is to say, high UL_interference value as broadcast). It will be appreciated that cells with a high interference that are within range are able to manage and decode user equipment transmissions, else any transmissions made by the user equipment will be seen as interference.

According to one embodiment, the method further comprises: transmitting data traffic at a transmit power determined by the selection step. Accordingly, the preamble, or selection phase is used to choose an appropriate data traffic initial transmission power.

In one embodiment, the method further comprises: receiving an indication to proceed and select a user equipment transmit power based upon an indication of transmit power received from the network access node acting as a serving cell for the user equipment. In a further embodiment a base station may be operable to send an AICH or other similar message during a preamble phase and that AICH may take a format such that the user equipment is prevented from waiting for further AICHs from further base stations. This command may be issued by the serving cell or may be issued by other cells. If issued by the user equipment serving cell, it will be appreciated that soft handover operation in a Cell_FACH state may be limited or prevented. In a particular implementation of soft handover in a Cell_FACH state, for example, the serving cell may allocate a non-soft handover common channel to user equipment for sending data traffic and, in such a case, there is no point in allowing the user equipment to wait for AICH messages from other cells since they may not be able to demodulate any messages sent by the user equipment on that non-soft handover allocated E-DCH common resource. In such an embodiment it may be understood that, for example, the command from the serving base station may simply be a scrambling code of a common E-DCH which is not that which has been requested by the preamble transmitted by the user equipment.

A second aspect provides a computer program product operable, when executed on a computer, to perform the method of the first aspect.

A second aspect provides a computer program product operable, when executed on a computer, to perform the method of the first aspect.

A third aspect provides user equipment operable to select transmit power on a common uplink channel in a wireless telecommunications network to enable implementation of soft handover techniques in a user equipment cell_FACH state, the common uplink channel being operable to support data traffic communication between the user equipment and at least one of a plurality of network access nodes; the user equipment comprising: determination logic operable to determine a set of the plurality of network access nodes with which communication can be established; calculation logic operable to calculate, based on received broadcast signals from network access nodes in the set, an indication of necessary user equipment transmit power for data traffic communication between the user equipment and each network access node in the set; and selection logic operable to select, based on the calculated indication of necessary user equipment transmit power for data traffic communication between the user equipment and each network access node in the set, a user equipment transmit power which corresponds to a largest value of the calculated indications.

In one embodiment, the determination logic is operable to determine which of the plurality of network access nodes acts as a serving cell for the user equipment; and the selection logic is operable to select user equipment transmit power which corresponds to a largest value based on the calculated indications for those calculated values which belong to the network access nodes determined to differ from the calculated indication of transmit power belonging the network access node determined to be the serving cell by less than a predetermined threshold.

In one embodiment, the determination logic is operable to determine which of the plurality of network access nodes are neighbour cells to a network access node which acts as a serving cell to the user equipment; and the selection logic is operable to select the user equipment transmit power which corresponds to a largest value of the calculated indications for those calculated indication values which belong to the network access nodes determined to be neighbour cells to the network access node which acts as a serving cell to the user equipment.

In one embodiment, the determination logic is operable to determine which of the plurality of network nodes are neighbour cells to the network access node which acts as a serving cell to the user equipment by: calculating an indication of path loss between the user equipment and the serving cell; calculating an indication of path loss between the user equipment and each other network access node; and classify those network access nodes which differ in path loss from the calculated serving cell path loss by less than a predetermined threshold as neighbour cells.

In one embodiment, the reception logic is further operable to receive an indication of a plurality of network nodes with which it may be possible for the user equipment to establish communication.

In one embodiment, the determination logic is operable to determine a set of the plurality of network access nodes with which communication can be established by: transmitting a request to commence communication on a predetermined common uplink channel to each of the plurality of network access nodes and awaiting a positive indication that communication may be established with that network access node on the predetermined common uplink channel.

According to one embodiment, the user equipment is operable to await a positive indication that communication may be established with at least one of the plurality of network access nodes before selecting user equipment transmit power.

In one embodiment, the user equipment is operable to await a positive indication from a predetermined sub-set of the plurality of network access nodes before selecting user equipment transmit power, the predetermined sub-set being selected on the basis of a predetermined threshold of calculated indication of distance to each network access node from the user equipment, based upon transmissions made by each network access node received at the user equipment.

In one embodiment, the user equipment further comprises transmission logic operable to transmit data traffic at a transmit power determined by the selection logic.

In one embodiment, the user equipment further comprises reception logic operable to receive an indication to proceed and select a user equipment transmit power based upon an indication of transmit power received from the network access node acting as a serving cell for the user equipment.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments will now be described further with reference to the accompanying drawings in which:

Figure 1 illustrates the main components of a telecommunications network according to one embodiment;
Figure 2 illustrates schematically user equipment in an overlap region between base stations in a wireless telecommunications network such as that shown in Figure 1; and
Figure 3 illustrates schematically a user equipment preamble power ramping procedure in accordance with one embodiment.

DESCRIPTION OF THE EMBODIMENTS

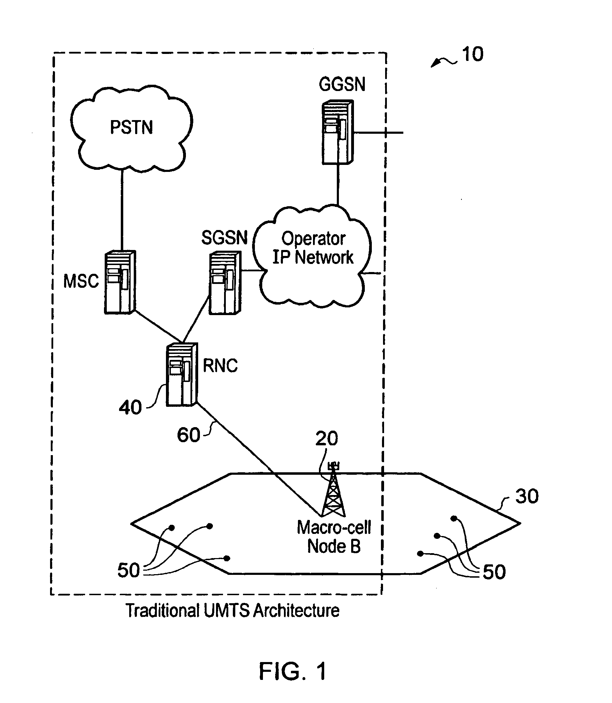

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

The wireless communications system is managed by a radio network controller (RNC) 40. The RNC 40 controls operation of the wireless telecommunications system by communicating with a plurality of base stations over a backhaul communications link 60. The RNC also communicates with user equipment 50 via each base station and, thus, effectively manages a region of the entire wireless communications network 10. User equipment communicates with base stations 20 by transmitting data and information on channels known as uplink or reverse channels, and a base station 20 communicates with user equipment 50 by transmitting data and information on radio channels known as downlink or forward channels.

Transmit Power Control

As described above, a radio network controller (RNC) 40 controls operation of the wireless communications system by communicating with a base station 20 over a backhaul communications link. The RNC 40 also communicates indirectly with user equipment 50 via radio links with base station 20. A base station thus cooperates with an RNC and user equipment, thereby effecting efficient management and overall operation of a wireless communications system.

In general, operational characteristics of a radio carrier forming a link between user equipment 50 and a base station 20 are controlled by user equipment controller logic based upon information and signals received from a base station 20. A pilot channel of a radio carrier acts as a dedicated physical control channel and is necessary to maintain contact between user equipment 50 and a base station 20. Power allocated to a pilot channel of a radio carrier is typically determined by user equipment controller logic based upon information received from a base station via a radio link. The power control process between user equipment and a base station sets the level of overall power allocated to a pilot channel of a radio carrier and is known as "inner loop power control". Inner loop power control operates to pre-allocate power from a user equipment power source to the radio carrier. That is to say, transmit power of the user equipment is controlled in this way.

"Outer loop" power control for uplink operates at an RNC and acts to set a target signal to noise and interference ratio. The inner loop power control is operable to try to maintain a target signal to noise and interference ratio set by the outer loop power control process.

If user equipment 50 is geographically close to a base station, or a radio carrier is experiencing a particularly advantageous radio transmission environment, the transmit power allocated to a channel of a radio carrier may typically be quite low to maintain a predetermined signal to noise and interference ratio. If a low power has been allocated to a carrier, it will typically mean that a low power is required to maintain contact between that carrier on that user equipment and a base station. It will thus be understood that the power level pre-allocated to a channel of a radio link by an inner loop power control process is likely to be representative of an estimated power requirement associated with maintaining contact with a base station and sending data on a data channel of that carrier.

Soft Handover

In some cellular systems, for example, in a UMTS system, functionality known as "soft handover" (SHO) can be implemented. According to such a system, data traffic transmitted by user equipment or other mobile terminals using uplink channels can be received at multiple base stations. Those base stations may also be known in UMTS as "node Bs". Furthermore, if utilizing soft handover techniques, a user equipment may receive and combine data from multiple base stations in the downlink. That is to say, the user equipment can receive or listen to transmissions from multiple base stations and multiple base stations may listen to transmissions made by user equipment. This has several advantages including that transmissions made by user equipment are not seen as interference by adjacent cells. In order that such soft handover techniques can be implemented, it is necessary for user equipment and the relevant node Bs to known that they are allowed to communicate with one another. The user equipment is informed of those node Bs by which its transmissions can be heard and to which it may listen. That list of base stations is considered to be in the "active set" of that user equipment.

Typically, if implementing a soft handover regime, whilst user equipment is operating in a dedicated connected state, a radio link is first set up between user equipment and a single base station. If it is determined that entry to a soft handover regime is desirable, necessary information about the configuration of existing uplink transmissions from the user equipment to the single base station, including for example scrambling code being used, can be passed from a first base station via a radio network controller (RNC) to a second node B that is to be added to the active set of the user equipment. That information passed to a second node B enables the second node B to synchronize its operation to the user equipment's uplink transmissions. Once a second node B has obtained uplink synchronization, the second node B can set up a new downlink with the user equipment such that its transmission timing is designed to be received at the user equipment close to the reception timing of the existing downlink between the first base station and the user equipment.

Use of soft handover techniques can lead to improved network performance, since by allowing more than one base station to communicate with user equipment it is possible to obtain a degree of selective combination gain through macro diversity, soft combinations also leading to gain and to minimise interference caused between cells by user equipment operating at the edge of geographical coverage regions supported by base stations.

As described above, the process of soft handover offers significant opportunity for a network to operate more efficiently.

Transmission of Discontinuous or Bursty Data

The widespread popularity of "smartphones" in commercial networks has led to a change in typical data traffic profile carried on data carriers. The loading of web pages and subsequent user reading, for example, has led to a data traffic profile which has become substantially discontinuous or bursty, and traditional power control algorithms designed primarily for continuous data transmission may not offer a particularly efficient power control regime. This can lead to network resource overuse and the draining of user equipment power sources. In particular, in a UMTS radio network, for example, utilisation of power control algorithms designed for continuous data transmission may result in a waste of available user equipment power and cause unnecessary interference to other users when a channel carrying data is inactive and a signal to interference ratio target according to continuous data transmission regimes is set particularly high due to the latest data transmissions.

User equipment may operate in various modes in, for example, a UMTS telecommunications network. On initial turning on of user equipment in a cell, it will typically operate in "idle mode". Once it synchronises and attaches itself to a base station, it gains radio resource control (RRC) connection and is referred to as being in a connected mode. User equipment in idle mode does not have a radio resource control connection. If user equipment is RRC connected it can be in one of five different RRC states: Cell_DCH, Cell_FACH, Enhanced Cell_FACH, Cell_PCH, or URA_PCH states.

User equipment typically moves into Cell_DCH state when its data traffic is high, since in such a state the user equipment is allocated a dedicated channel on which to transmit and receive data from a base station. In a UMTS network architecture, user equipment can be in Cell_DCW state when it is expected to have a high volume of traffic. Operation in a Cell_DCH state is typically highly demanding of battery power. User equipment may be operable, when not in a Cell_DCH state, to use a random access channel (RACH) on the uplink and a base station will operate to communicate with user equipment using a forward access channel (FACH). RACH and FACH have typically a small data carrying ability and in WCDMA or UMTS systems a capability for user equipment and base stations to operate and communicate data traffic therebetween using a shared or common resource on downlink and uplink when user equipment is in a Cell_FACH state has been introduced.

In the uplink the data traffic transmission occurs using an enhanced dedicated channel and in the downlink it is sent on a high-speed downlink shared channel. Such channels allow user equipment and base stations to communicate and to transmit longer and larger data packets between themselves for a time without the need for user equipment to enter a Cell_DCH state. Such arrangements allow user equipment to remain in a Cell_FACH state for longer without transitioning to more dedicated RRC states, thereby allowing a power consumption saving.

It will be appreciated that for data traffic which is particularly bursty in nature, operation in a full Cell_DCH state may be particularly wasteful of battery at the user equipment and also of available radio resource, thus the ability to handle bursty traffic without entering a more dedicated state may be beneficial to overall network operation.

Soft Handover in Non-Cell DCH States

The soft handover techniques described previously are typically used when user equipment operates in a Cell_DCH state. As described previously, in such a state, data transmissions are typically likely to last for a significant length of time and, thus, setting up the relationships necessary for soft handover via messaging through an RNC may be deemed to be worth the time taken since overall data traffic throughput can be significantly increased through a network.

However, it has been appreciated that use of soft handover techniques may also be useful when user equipment is operating in a Cell_FACH state transmitting bursty data from user equipment to base stations. In such an instance it can be beneficial for user equipment to transmit at a higher power, such that base stations which are not acting as a serving base station to that user equipment can receive packets of data in a bursty transmission and decode them in accordance with typical soft handover techniques.

It will be appreciated that implementation of soft handover techniques in a user equipment Cell_FACH state can improve overall network operation, but user equipment transmitting at a very high a power to try and maximise the number of base stations available for soft handover techniques may itself be operating inefficiently by draining its own power source or by causing unnecessary interference to cells supported by base stations.

Aspects described herein describe methods by which a compromise between transmit power at user equipment and reaching sufficient base stations to implement soft handover techniques in user equipment Cell_FACH state may be efficiently determined.

There are various proposals to implement soft handover techniques for user equipment operating in a Cell_FACH state. For example, one possible method of implementation of soft handover techniques is to assign a subset of commonly shared channels for which user equipment compete, for example, E-DCH resource. By assigning such resources to be used in overlap regions between base stations for soft handover in a Cell_FACH state, it can be ensured by the network that those common E-DCH resources will be able to be de-modulated by selected neighbour base stations supporting selected neighbour cells. De-modulation information for those resources (for example, scrambling codes and system frame number timings) will therefore be known to neighbour cells.

In such an implementation of soft handover in Cell_FACH, selected neighbour cells detect the specific common E-DCH preambles. User equipment operable in an overlap region suitable for implementation of soft handover techniques is operable to select a common soft handover E-DCH resource and send a preamble to its serving cell. The user equipment may determine it is in a potential soft handover region by making appropriate measurements of transmissions made by each base station and determining, for example, that they lie within a particular threshold value of one another.

If implementing soft handover techniques, each common soft handover E-DCH resource may correspond to a unique preamble signature. A neighbouring cell participating in Cell_FACH soft handover is also operable to be looking for such preambles transmitted by user equipment.

However, user equipment operating in a Cell_FACH state has its transmit power determined only by its serving cell. That is to say, the transmit power of user equipment is such that transmissions successfully reach the serving cell and no account is necessarily made of whether the user equipment transmissions reach any other base stations and therefore whether any other base stations may be operable and contribute to soft handover techniques. It will be appreciated that, ideally, user equipment would be operable to take account of the possibility of use of soft handover techniques whilst operating in a Cell_FACH state and determine a suitable preamble transmission power on which to transmit information on common soft handover E-DCH resources.

Overview

Aspects described herein seek to identify cells which may efficiently participate in soft handover techniques whilst a user equipment is operating in a Cell_FACH mode and, once those cells have been identified, methods described herein seek to identify that cell which has a weak or the weakest radio link to a given user equipment and calculate an open loop preamble transmit power for the user equipment to transmit upon, based on measurements for that particular weak cell.

According to such aspects, user equipment is operable to perform usual preamble power ramping until it receives an AICH from at least some of the cells identified as potential targets for soft handover techniques in a Cell_FACH state. The user equipment may be operable such that if it has received an AICH from at least N cells, it may proceed to send a message - that is to say, data traffic. It will be understood that the user equipment's serving cell is advantageously one of the N cells.

In general, let the set of N cells be denoted as $S_{AJCH}$.

It will be appreciated that the user equipment need not receive N positive AICH messages in order to proceed to transmission of a message. The method may be implemented such that a user equipment need only receive M out of N AICH messages in order to proceed.

Let the subset of M cells in the set $S_{AICH}$ be denoted as $S_{positive\ AICH}$.

That set of M cells are the cells from which the user equipment must receive a positive AICH before proceeding to transmit data traffic.

According to methods described herein, if the user equipment has reached a maximum number of preamble transmissions (bearing in mind that the preamble transmissions ramp up through a set of pre-set power settings) and has not received N AICH messages, according to some embodiments that user equipment may proceed to transmit data traffic as long as it has received positive AICH from the M cells in $\mathbf{S_{positive\ AICH}}$.

If not operating in a soft handover in Cell_FACH state, once a base station has received an open loop preamble transmit power message from user equipment and responded with a positive AICH then that base station will typically expect data traffic or a message to follow after the user equipment receives the AICH. Some alteration to base station operation will be required in order to implement soft handover techniques in a Cell-FACH situation. For example, each cell may be operable to expect more preambles to be sent by the user equipment to other cells and, thus, some delay may occur prior to reception of data traffic on a common data channel allocated by a base station to that user equipment and indicated to that user equipment by an AICH message.

Soft handover operation in Cell_FACH may be implemented in a number of ways. It may be that common E-DCH resources are used for soft handover operation in Cell-FACH, as described previously, by pre-allocating a set of common E-DCH resources for use in overlap regions between base stations. This is, however, by no means the only manner in which soft handover operation in Cell_FACH can be achieved. Aspects described herein are applicable for all forms of Cell_FACH soft handover operation in which user equipment is operable to send preamble information, or is operable to connect to more than one cell in an initial transmission.

Setting User Equipment Initial Transmission Power

Initial transmission power at user equipment operating in Cell_FACH or other random access channel states is set using open loop power control. That open loop power control process sets a first preamble transmission power for transmission to a serving cell in accordance with the following equation:

*Equation 1:*

$$P\_initial\ preamble = P\_TXCPICH - CPICH\_RSCP + UL\_interference + K$$

where:

P_TXCPICH is the transmit power of the primary CPICH at the base station.
Also known as the base station transmit power which is broadcast by a base station to all user equipment in hearing distance.
CPICH_RSCP is the measured CPICH received power at the user equipment. UL_interference is the uplink interference determined at the base station. That information is also broadcast by a base station to user equipment in its area.
and:
K is a constant value broadcast by a base station.

In one embodiment, the user equipment is operable to calculate a preamble transmission power (P_initial preamble) for each cell which may be operable to provide soft handover operation whilst it remains in a Cell_FACH state.

Let the initial preamble power for cell J be denoted as P_initial_preamble_J, where J falls in the set $S_{SHO}$, that set containing all cells which may participate in Cell_FACH soft handover operation.

The set $S_{SHO}$ may be similar to a user equipment active set but, according to some embodiments, unlike the active set it may be predetermined by the network.

In accordance with one embodiment, an initial preamble power for user equipment transmitting to base stations and hoping to achieve soft handover operation whilst in a Cell_FACH state can therefore be set by:

### Equation 2

$$P\_initial\ preamble = max\ (P\_initial\_preamble\_J)$$

In a further embodiment, user equipment may be operable to transmit at a maximum of *delta* P over the P_initial preamble determined for its serving cell. It will be understood that such an arrangement limits user equipment transmit power and prevents the user equipment from trying to reach potentially participating cells supported by base stations which are too far away. If a cell is too far away, user equipment transmissions occurring on a Cell_FACH shared or common channel are likely to cause little interference to such a distant cell.

According to such an embodiment, P_initial preamble_S may be the initial preamble power calculated by user equipment for its serving cell and, thus, the user equipment may be operable to set its initial transmission preamble power according to this embodiment in a manner according to Equation 3:

### Equation 3

$$P\_initial\ preamble = min\ (max\ (P\_initial\_preamble\_J),\ P\_initial\_preamble\_S + delta\ P)$$

According to a further embodiment, user equipment may be operable to select a set of neighbour cells from a set $S_{SHO}$ which may be available to participate in soft handover during Cell_FACH operation and that set selected from the set $S_{SHO}$ may be included in the set $S_{AICH}$.

Accordingly, it is the set $S_{AICH}$ to which the user equipment is operable to listen for an AICH response. In determining whether or not to put a cell in a particular set, the user equipment may be operable to measure or calculate path loss between itself and cells in the set $S_{SHO}$ and, further, to exclude any cells in $S_{SHO}$ if the calculated path loss differs from that of the path loss to its serving cell by more than a predetermined increment. That increment may be referred to as *delta* **PL**.

According to such an embodiment, the user equipment may proceed to transmit data traffic without waiting for an AICH message from cells excluded from being of interest on the basis of that calculated path loss difference. It will be appreciated that a cell which lies outside that path loss difference is likely to be further away from the user equipment and, thus, be unlikely to benefit from a soft handover operation whilst the user equipment is in a Cell_FACH state. It will be appreciated that *delta* P may be the same as *delta* PL, but there is no particular restriction that they need be the same.

According to a further embodiment, the user equipment may be operable to only consider cells in set $S_{AICH}$ when calculating its initial transmit power (P_initial preamble). It will be understood that if the user equipment is not operable to listen for an AICH from a cell acknowledging and allocating a common resource, there is no need to try and send a preamble to that cell.

According to one embodiment, the transmit power of the data traffic is set according to a predetermined offset to a strongest preamble power calculated to reach a cell in the set $S_{positive\ AICH}$. That is to say, the user equipment stores in its memory the calculated preamble power for each cell from which it receives a positive AICH response. The user equipment is then operable to select which of those cells required the strongest preamble power. Such embodiment ensures that the user equipment is operable to transmit the data traffic on a shared channel whilst the user equipment remains in a Cell_FACH state and that message is likely to reach all cells which are interested and able in listening to the user equipment transmissions and are therefore able to operate according to soft handover techniques.

According to a further embodiment, if user equipment receives a negative AICH response from a cell which is closer than a cell for which it receives a positive AICH response it may be operable to set its transmit power such that the cell for which a negative response is received is unlikely to be reached. Such an approach allows the user equipment to transmit the message only to cells that are interested in listening to the user equipment transmissions, whilst causing minimal interference to those cells which have indicated that they cannot listen to the user equipment transmissions. In such an arrangement, the transmit power may be selected to be that which is slightly smaller or next closest to the preamble power calculated for the cell which returned a negative AICH response.

According to a further embodiment, the set of cells placed in set $S_{positive\ AICH}$ selected from the set $S_{AICH}$ is chosen to be cells which are very close to a user equipment serving cell. Those cells may be described as having high interference (that is to say, high UL_interference value as broadcast). It will be appreciated that cells with a high interference that are within range are able to manage and decode user equipment transmissions, else any transmissions made by the user equipment will be seen as interference.

In some embodiments the set of cells in $S_{positive\ AICH}$ may just be the serving cell. However, in some embodiments that set may be larger and it is therefore necessary to get everyone in that set of cells to listen or the user equipment may not be operable to transmit at all whilst in a Cell_FACH state.

In a further embodiment a base station may be operable to send an AICH or other similar message during a preamble phase and that AICH may take a format such that the user equipment is prevented from waiting for further AICHs from further base stations. This command may be issued by the serving cell or may be issued by other cells. If issued by the user equipment serving cell, it will be appreciated that soft handover operation in a Cell_FACH state may be limited or prevented. In a particular implementation of soft handover in a Cell_FACH state, for example, the serving cell may allocate a non-soft handover common channel to user equipment for sending data traffic and, in such a case, there is no point in allowing the user equipment to wait for AICH messages from other cells since they may not be able to demodulate any messages sent by the user equipment on that non-soft handover allocated E-DCH common resource. In such an embodiment it may be understood that, for example, the command from the serving base station may simply be a scrambling code of a common E-DCH which is not that which has been requested by the preamble transmitted by the user equipment.

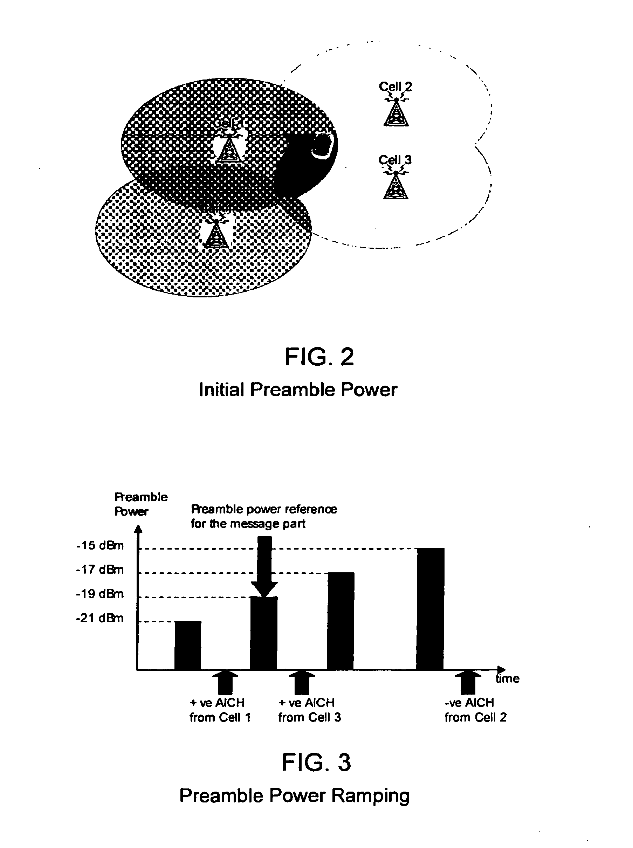

Figure 2 illustrates schematically user equipment 50 located in an overlap region between base stations supporting cells in a wireless telecommunications network such as that shown in Figure 1. The base stations 20 support cells 1, 2, 3 and 4. User equipment 50 is primarily attached to cell 1; that is to say, cell 1 is the serving cell for user equipment 50.

The user equipment shown in Figure 2 is connected to cell 1 and is operating in a Cell_FACH state. The base station supporting cell 1 broadcasts common-DCH resources to be used for Cell_FACH soft handover, together with the demodulation information for those allocated resources and their corresponding preambles. The demodulation information of those resources and their corresponding preambles are also known to each cell available in the set $S_{SHO}$. In this particular embodiment, let delta PL_serving be the difference in path loss between a serving cell and cell J. That value can be calculated according to the following equation:

*Equation 4*

$$\textit{Delta PL\_serving = path loss for cell J – serving cell path loss}$$

The serving cell broadcasts the following to user equipment in its geographical area of service. Of course, it will be appreciated that these may also be transmitted to the user equipment via RRC messages. Firstly, the base station indicates to user equipment that the set $S_{SHO}$ comprises the cells cell 1, cell 2, cell 3, cell 4. The user equipment is also instructed that cells are to be included in the set $S_{AICH}$ if delta PL_serving is less than delta PL (as described above). In this particular instance, delta PL is set to 8dB. Furthermore, the serving base station is operable to tell user equipment that the set $S_{positive\ AICH}$ comprises only the serving cell. In this particular embodiment, $S_{positive\ AICH}$ = (cell 1).

Given the information provided by the serving cell base station, the user equipment is operable to perform measurements on each of the cells from which it can receive a pilot signal. In particular, when user equipment determines that it is within a region in which soft handover techniques may be used, the user equipment then performs specific measurements to obtain the path loss for each cell in the set $S_{SHO}$. The path losses and delta PL_serving for each cell in the set $S_{SHO}$ are shown in Table 1.

**Table 1: Path loss measured by UE.**

| Cell | Path Loss (dB) | $\Delta PL\_Serving$ (dB) |
|---|---|---|
| Cell 1 | 90 | 0 |
| Cell 2 | 95 | 5 |
| Cell 3 | 96 | 6 |
| Cell 4 | 100 | 10 |

Since the delta PL_serving for cell 4 is 10dB (which is higher than the 8dB threshold set for this particular embodiment), cell 4 is excluded from the set **S**$_{AICH}$. That is to say, the set **S**$_{AICH}$ is restricted to the set of cells: cell 1, cell 2, cell 3.

User equipment 50 is then operable to calculate for each cell in the set S$_{AICH}$ an initial preamble power P_initial preamble (see Equation 1 above). For the particular embodiment illustrated schematically in Figure 2, the initial preamble power is calculated and shown in Table 2.

**Table 2: *Initial Preamble Power***

| Cell | Path Loss (dB) | *UL_Interference* (dBm) | *K* | *P_InitialPreamble* (dBm) |
|---|---|---|---|---|
| Cell 1 | 90 | -105 | -12 | -27 |
| Cell 2 | 95 | -104 | -12 | -21 |
| Cell 3 | 96 | -107 | -12 | -23 |
| Cell 4 | 100 | Not Required | Not Required | Not Required |
| *P_InitialPreamble to transmit* | | | | -21 |

In this particular embodiment; the initial transmit power for the preamble used by user equipment is determined according to Equation 2 above. That is to say, the user equipment selects the maximum of all preamble powers and in this case it is calculated to be-21dBm. User equipment is then operable to begin its preamble ramping cycle as shown in Figure 3. The user equipment begins by transmitting at -21dBm and receives a positive AICH from cell 1, its serving cell. Since the user equipment did not receive a positive AICH from cell 2 or cell 3, it is operable to increase its preamble transmission power by 2dB (this is the step size in the preamble procedure according to this illustrative embodiment) and thus transmits a second preamble at -19dBm. As can be seen in Figure 3, that second transmission of a preamble reaches cell 3 and the user equipment receives a positive AICH from cell 3. Since the user equipment 50 has not yet reached remaining cell 2, it continues to ramp through its power in a typical preamble transmission manner and obtains an AICH response from cell 2 after two further power ramping increments. However, as illustrated by Figure 3, cell 2 returns a negative response to user equipment 50 since it does not have enough resource to handle that user equipment. In this particular illustrative embodiment it will therefore be appreciated that cell 2 does not participate in providing soft handover techniques whilst user equipment 50 is operating in a Cell_FACH state.

Since in this illustrative embodiment the set **S**$_{positive\ AICH}$ = (cell 1) and the user equipment has received positive AICH from cell 1, it is then operable to proceed to transmit the message or data traffic part. The user equipment is operable to store the preamble transmission power used for each positive AICH and the strongest preamble transmission power (that is smaller than a lowest NACKed preamble power) corresponding to a positive AICH from cell 3 is from the second transmission at -19dBm. As a result, the user equipment is operable to use this preamble power (-l9dBm) as the reference power in determining the transmit power at which to send the message part (that is to say, the E-DPDCH, E-DPCCH and DPCCH channels).

Accordingly, a user equipment operable to perform this method is operable to ensure that the right transmit power is selected to reach cells operable to participate in soft handover techniques whilst the user equipment is in a Cell_FACH state.

It will be appreciated that aspects described herein allow user equipment to determine preamble transmission power and thus to ensure that transmissions made by the user equipment in a Cell_FACH state may be received by more than one cell. The various embodiments describe simple ways which enable user equipment to determine a suitable preamble transmission power to reach more than one cell which, in turn, allows some form of soft handover to work whilst user equipment is operating in a Cell_FACH state.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of selecting user equipment (50) transmit power on a common uplink channel in a wireless telecommunications network (10) to enable implementation of soft handover techniques in a user equipment cell_FACH state, said common uplink channel being operable to support data traffic communication between said user equipment (50) and at least one of a plurality of network access nodes (20); said method comprising:

   determining a set of said plurality of network access nodes (20) with which communication can be established;
   calculating, based on received broadcast signals from network access nodes (20) in said set, an indication of necessary user equipment (50) transmit power for data traffic communication between said user equipment (50) and each network access node (20) in said set; and
   selecting, based on said calculated indication of necessary user equipment transmit power for data traffic communication between said user equipment (50) and each network access node (20) in said set, a user equipment transmit power which corresponds to a largest value of said calculated indications.

2. A method according to claim 1, comprising:

   determining which of said plurality of network access nodes (20) acts as a serving cell for said user equipment (50);
   selecting said user equipment transmit power which corresponds to a largest value based on said calculated indications for those calculated values which belong to said network access nodes (20) determined to differ from said calculated indication of transmit power belonging to said network access node determined to be said serving cell by less than a predetermined threshold.

3. A method according to claim 1 or claim 2, comprising:

   determining which of said plurality of network access nodes (20) are neighbour cells to a network access node which acts as a serving cell to said user equipment (50);
   selecting said user equipment (50) transmit power which corresponds to a largest value of said calculated indications for those calculated indication values which belong to said network access nodes determined to be neighbour cells to said network access node which acts as a serving cell to said user equipment (50).

4. A method according to claim 3, comprising:

   determining which of said plurality of network nodes (20) are neighbour cells to said network access node which acts as a serving cell to said user equipment (50) by:

calculating an indication of path loss between said user equipment (50) and said serving cell (20);
calculating an indication of path loss between said user equipment (50) and each other said network access node (20); and
classifying those network access nodes (20) which differ in path loss from said calculated serving cell path loss by less than a predetermined threshold as neighbour cells.

5. A method according any preceding claim, comprising:

receiving an indication of a plurality of network nodes (20) with which it may be possible for said user equipment (50) to establish communication.

6. A method according to any preceding claim, comprising:

determining a set of said plurality of network access nodes (20) with which communication can be established by:

transmitting a request to commence communication on a predetermined common uplink channel to each of said plurality of network access nodes (20) and awaiting a positive indication that communication may be established with that network access node on said predetermined common uplink channel.

7. A method according to claim 6, comprising:

awaiting a positive indication that communication may be established with at least one of said plurality of network access nodes (20) before selecting user equipment transmit power.

8. A method according to claim 7, comprising:

awaiting a positive indication from a predetermined sub-set of said plurality of network access nodes (20) before selecting user equipment (50) transmit power, said predetermined sub-set being selected on the basis of a predetermined threshold of calculated indication of distance to said each network access node from said user equipment (50), based upon transmissions made by each said network access node received at said user equipment (50).

9. A method according to any preceding claim, comprising:

transmitting data traffic at a transmit power determined by said selection step.

10. A method according to any preceding claim, comprising:

receiving an indication to proceed and select a user equipment (50) transmit power based upon an indication of transmit power received from said network access node (20) acting as a serving cell for said user equipment.

11. A computer program product operable, when executed on a computer, to perform the method of any one of claims 1 to 10.

12. User equipment (50) operable to select transmit power on a common uplink channel in a wireless telecommunications network to enable implementation of soft handover techniques in a user equipment cell_FACH state, said common uplink channel being operable to support data traffic communication between said user equipment and at least one of a plurality of network access nodes (20); said user equipment (50) comprising:

determination logic operable to determine a set of said plurality of network access nodes (20) with which communication can be established;
calculation logic operable to calculate, based on received broadcast signals from network access nodes in said set, an indication of necessary user equipment transmit power for data traffic communication between said user equipment (50) and each network access node (20) in said set; and
selection logic operable to select, based on said calculated indication of necessary user equipment transmit power for data traffic communication between said user equipment (50) and each network access node (20) in said set, a user equipment transmit power which corresponds to a largest value of said calculated indications.

**EP 2 575 401 B1**

**Patentansprüche**

1. Verfahren zur Auswahl der Sendeleistung eines Teilnehmergeräts (50) auf einem gemeinsamen Uplink-Kanal in einem drahtlosen Telekommunikationsnetzwerk (10), um das Implementieren von Soft-Handover-Techniken im Cell_FACH-Zustand eines Teilnehmergeräts zu ermöglichen, wobei der besagte gemeinsame Uplink-Kanal betreibbar ist, um die Datenverkehrskommunikation zwischen dem besagten Teilnehmergerät (50) und mindestens einem einer Vielzahl von Netzwerkzugangsknoten (20) zu unterstützen, wobei das besagte Verfahren umfasst:

   Ermitteln eines Satzes der besagten Vielzahl von Netzwerkzugangsknoten (20), mit denen eine Kommunikation aufgebaut werden kann;
   Berechnen, auf der Basis von von Netzwerkzugangsknoten (20) in dem besagten Satz empfangenen Rundfunksignalen, einer Angabe der für die Datenverkehrskommunikation zwischen dem besagten Teilnehmergerät (50) und jedem Netzwerkzugangsknoten (20) in dem besagten Satz erforderlichen Sendeleistung des Teilnehmergeräts (50); und
   Auswählen, auf der Basis der besagten berechneten Angabe der für die Datenverkehrskommunikation zwischen dem besagten Teilnehmergerät (50) und jedem Netzwerkzugangsknoten (20) in dem besagten Satz erforderlichen Sendeleistung des Teilnehmergeräts, einer Sendeleistung des Teilnehmergeräts, welche einem höchsten Wert der besagten berechneten Angaben entspricht.

2. Verfahren nach Anspruch 1, umfassend:

   Ermitteln, welcher der besagten Vielzahl von Netzwerkzugangsknoten (20) als eine bedienende Zelle für das besagte Teilnehmergerät (50) agiert;
   Auswählen der Sendeleistung des besagten Teilnehmergeräts, welche einem höchsten Wert entspricht, auf der Basis der besagten berechneten Angaben für diejenigen berechneten Werte, die zu den besagten Netzwerkzugangsknoten (20) gehören, für welche ermittelt wurde, dass sie sich von der besagten berechneten Angabe der Sendeleistung, welche zu dem besagten als die besagte bedienende Zelle ermittelten Netzwerkzugangsknoten gehören, um weniger als einen vorbestimmten Grenzwert unterscheiden.

3. Verfahren nach Anspruch 1 oder Anspruch 2, umfassend:

   Ermitteln, welche der besagten Vielzahl von Netzwerkzugangsknoten (20) Nachbarzellen eines Netzwerkzugangsknotens, der als eine bedienende Zelle des besagten Teilnehmergeräts (50) agiert, sind;
   Auswählen der Sendeleistung des besagten Teilnehmergeräts (50), welche einem höchsten Wert der besagten berechneten Angaben für diejenigen berechneten Angabewerte, welche zu den besagten als Nachbarzellen des besagten Netzwerkzugangsknotens, der als eine bedienende Zelle des besagten Teilnehmergeräts (50) agiert, ermittelten Netzwerkzugangsknoten gehören.

4. Verfahren nach Anspruch 3, umfassend:

   Ermitteln, welche der besagten Vielzahl von Netzwerkknoten (20) Nachbarzellen des besagten als eine bedienende Zelle des besagten Teilnehmergeräts (50) agierenden Netzwerkzugangsknotens sind, durch:

      Berechnen einer Angabe des Pfadverlustes zwischen dem besagten Teilnehmergerät (50) und der besagten bedienenden Zelle (20);
      Berechnen einer Angabe des Pfadverlustes zwischen dem besagten Teilnehmergerät (50) und jedem anderen der besagten Netzwerkzugangsknoten (20); und
      Klassifizieren derjenigen Netzwerkzugangsknoten (20), für welche sich der Pfadverlust von dem Pfadverlust der besagten berechneten bedienenden Zelle um weniger als ein vorbestimmter Grenzwert unterscheidet, als Nachbarzellen.

5. Verfahren nach einem beliebigen der vorstehenden Ansprüche, umfassend:

   Empfangen einer Angabe einer Vielzahl von Netzwerkknoten (20), mit denen das besagte Teilnehmergerät (50) möglicherweise eine Verbindung aufbauen kann.

6. Verfahren nach einem beliebigen der vorstehenden Ansprüche, umfassend:

Ermitteln eines Satzes der besagten Vielzahl von Netzwerkzugangsknoten (20), mit denen eine Kommunikation aufgebaut werden kann, durch:

Übertragen einer Anforderung für den Beginn der Kommunikation auf einem vorbestimmten gemeinsamen Uplink-Kanal an einen jeden der besagten Vielzahl von Netzwerkzugangsknoten (20), und Abwarten einer positiven Angabe darüber, dass eine Kommunikation mit jenem Netzwerkknoten auf dem besagten vorbestimmten gemeinsamen Uplink-Kanal aufgebaut werden kann.

7. Verfahren nach Anspruch 6, umfassend:

Abwarten einer positiven Angabe darüber, dass eine Kommunikation mit mindestens einem der besagten Vielzahl von Netzwerkzugangsknoten (20) aufgebaut werden kann, vor Auswählen der Sendeleistung des Teilnehmergeräts.

8. Verfahren nach Anspruch 7, umfassend:

Abwarten einer positiven Angabe von einem vorbestimmten Teilsatz der besagten Vielzahl von Netzwerkzugangsknoten (20) vor Auswählen der Sendeleistung des Teilnehmergeräts (50), wobei der besagte vorbestimmte Teilsatz auf der Basis eines vorbestimmten Grenzwertes einer berechneten Angabe der Entfernung von dem besagten Teilnehmergerät (50) zu jedem Netzwerkzugangsknoten, basierend auf an dem besagten Teilnehmergerät (50) von jedem besagten Netzwerkzugangsknoten empfangenen Übertragungen, ausgewählt wird.

9. Verfahren nach einem beliebigen der vorstehenden Ansprüche, umfassend:

Übertragen des Datenverkehrs mit einer durch den besagten Schritt des Auswählens bestimmten Sendeleistung.

10. Verfahren nach einem beliebigen der vorstehenden Ansprüche, umfassend:

Empfangen einer Angabe zum Fortfahren und Auswählen der Sendeleistung eines Teilnehmergeräts (50) auf der Basis einer von dem besagten als eine bedienende Zelle für das besagte Teilnehmergerät agierenden Netzwerkzugangsknoten (20) empfangenen Angabe der Sendeleistung.

11. Computerprogramm-Produkt, betreibbar, um bei dessen Ausführung auf einem Computer das Verfahren eines beliebigen der Ansprüche 1 bis 10 durchzuführen.

12. Teilnehmergerät (50), betreibbar für das Auswählen der Sendeleistung auf einem gemeinsamen Uplink-Kanal in einem drahtlosen Telekommunikationsnetzwerk, um das Implementieren von Soft-Handover-Techniken im Cell_FACH-Zustand eines Teilnehmergeräts zu ermöglichen, wobei der besagte gemeinsame Uplink-Kanal betreibbar ist, um die Datenverkehrskommunikation zwischen dem besagten Teilnehmergerät und mindestens einem einer Vielzahl von Netzwerkzugangsknoten (20) zu unterstützen, wobei das besagte Teilnehmergerät (50) umfasst:

Ermittlungslogik, betreibbar für das Ermitteln eines Satzes der besagten Vielzahl von Netzwerkzugangsknoten (20), mit denen eine Kommunikation aufgebaut werden kann;
Berechnungslogik, betreibbar für das Berechnen, auf der Basis von von Netzwerkzugangsknoten in dem besagten Satz empfangenen Rundfunksignalen, einer Angabe der für die Datenverkehrskommunikation zwischen dem besagten Teilnehmergerät (50) und jedem Netzwerkzugangsknoten (20) in dem besagten Satz erforderlichen Sendeleistung des Teilnehmergeräts; und
Auswahllogik, betreibbar für das Auswählen, auf der Basis der besagten berechneten Angabe der für die Datenverkehrskommunikation zwischen dem besagten Teilnehmergerät (50) und jedem Netzwerkzugangsknoten (20) in dem besagten Satz erforderlichen Sendeleistung des Teilnehmergeräts, einer Sendeleistung des Teilnehmergeräts, welche einem höchsten Wert der besagten berechneten Angaben entspricht.

## Revendications

1. Procédé de sélection d'une puissance d'émission d'un équipement utilisateur (50) sur un canal commun de liaison montante dans un réseau de télécommunication sans fil (10) pour permettre la mise en oeuvre de techniques de transfert intercellulaire sans coupure dans un état de cellule d'équipement utilisateur_FACH, ledit canal commun de liaison montante permettant de prendre en charge une communication de trafic de données entre ledit équipement utilisateur (50) et au moins un noeud parmi une pluralité de noeuds d'accès au réseau (20) ; ledit procédé comprenant les étapes suivantes :

déterminer un ensemble de ladite pluralité de noeuds d'accès au réseau (20) avec lesquels une communication peut être établie ;

calculer, sur la base des signaux de diffusion reçus à partir des noeuds d'accès au réseau (20) dans ledit ensemble, une indication d'une puissance d'émission d'un équipement utilisateur (50) nécessaire pour une communication de trafic de données entre ledit équipement utilisateur (50) et chaque noeud d'accès au réseau (20) dans ledit ensemble ; et

sélectionner, sur la base de ladite indication calculée d'une puissance d'émission d'un équipement utilisateur nécessaire pour une communication de trafic de données entre ledit équipement utilisateur (50) et chaque noeud d'accès au réseau (20) dans ledit ensemble, une puissance d'émission d'un équipement utilisateur qui correspond à une valeur la plus grande desdites indications calculées.

2. Procédé selon la revendication 1, comprenant les étapes suivantes :

déterminer quel noeud, parmi ladite pluralité de noeuds d'accès au réseau (20), agit comme une cellule de desserte pour ledit équipement utilisateur (50) ;

sélectionner ladite puissance d'émission d'un équipement utilisateur qui correspond à une valeur la plus grande sur la base desdites indications calculées pour les valeurs calculées qui appartiennent auxdits noeuds d'accès au réseau (20) déterminés comme étant différents de ladite indication calculée d'une puissance d'émission appartenant audit noeud d'accès au réseau déterminé comme étant ladite cellule de desserte par moins d'un seuil prédéterminé.

3. Procédé selon la revendication 1 ou la revendication 2, comprenant les étapes suivantes :

déterminer quels noeuds, parmi ladite pluralité de noeuds d'accès au réseau (20), sont des cellules voisines d'un noeud d'accès au réseau qui agit comme une cellule de desserte pour ledit équipement utilisateur (50) ;

sélectionner ladite puissance d'émission d'un équipement utilisateur (50) qui correspond à une valeur la plus grande desdites indications calculées pour les valeurs d'indications calculées qui appartiennent auxdits noeuds d'accès au réseau déterminés comme étant les cellules voisines dudit noeud d'accès au réseau qui agit comme une cellule de desserte pour ledit équipement utilisateur (50).

4. Procédé selon la revendication 3, comprenant les étapes suivantes :

déterminer quels noeuds, parmi ladite pluralité de noeuds de réseau (20), sont des cellules voisines dudit noeud d'accès au réseau qui agit comme une cellule de desserte pour ledit équipement utilisateur (50) en :

calculant une indication d'affaiblissement de trajet entre ledit équipement utilisateur (50) et ladite cellule de desserte (20) ;

calculant une indication d'affaiblissement de trajet entre ledit équipement utilisateur (50) et chacun desdits autres noeuds d'accès au réseau (20) ;

classant les noeuds d'accès au réseau (20), dont l'affaiblissement de trajet est différent dudit affaiblissement de trajet de la cellule de desserte calculé par moins d'un seuil prédéterminé, en tant que cellules voisines.

5. Procédé selon l'une quelconque des revendications précédentes, comprenant l'étape suivante :

recevoir une indication d'une pluralité de noeuds de réseau (20) avec lesquels il peut être possible pour ledit équipement utilisateur (50) d'établir une communication.

6. Procédé selon l'une quelconque des revendications précédentes, comprenant les étapes suivantes :

déterminer un ensemble de ladite pluralité de noeuds d'accès au réseau (20) avec lesquels une communication peut être établie en :

transmettant une demande pour débuter une communication sur un canal commun de liaison montante prédéterminé à chacun parmi ladite pluralité de noeuds d'accès au réseau (20) et en attendant une indication positive qu'une communication peut être établie avec ce noeud d'accès au réseau sur ledit canal commun de liaison montante prédéterminé.

7. Procédé selon la revendication 6, comprenant l'étape suivante :

attendre une indication positive qu'une communication peut être établie avec au moins un parmi ladite pluralité de noeuds d'accès au réseau (20) avant de sélectionner une puissance d'émission d'un équipement utilisateur.

8. Procédé selon la revendication 7, comprenant l'étape suivante :

attendre une indication positive d'un sous-ensemble prédéterminé de ladite pluralité de noeuds d'accès au réseau (20) avant de sélectionner une puissance d'émission d'un équipement utilisateur (50), ledit sous-ensemble prédéterminé étant sélectionné sur la base d'un seuil prédéterminé d'une indication calculée de la distance jusqu'à chacun desdits noeuds d'accès au réseau à partir dudit équipement utilisateur (50), sur la base d'émissions réalisées par chacun desdits noeuds d'accès au réseau reçues au niveau dudit équipement utilisateur (50).

9. Procédé selon l'une quelconque des revendications précédentes, comprenant l'étape suivante :

émettre un trafic de données à une puissance d'émission déterminée par ladite étape de sélection.

10. Procédé selon l'une quelconque des revendications précédentes, comprenant l'étape suivante :

recevoir une indication pour continuer et sélectionner une puissance d'émission d'un équipement utilisateur (50) sur la base d'une indication d'une puissance d'émission provenant dudit noeud d'accès au réseau (20) agissant comme une cellule de desserte pour ledit équipement utilisateur.

11. Produit de programme informatique permettant, lorsqu'il est exécuté sur un ordinateur, d'exécuter le procédé selon l'une quelconque des revendications 1 à 10.

12. Équipement utilisateur (50) permettant de sélectionner une puissance d'émission sur un canal commun de liaison montante dans un réseau de télécommunication sans fil pour permettre la mise en oeuvre de techniques de transfert intercellulaire sans coupure dans un état de cellule d'équipement utilisateur_FACH, ledit canal commun de liaison montante permettant de prendre en charge une communication de trafic de données entre ledit équipement utilisateur et au moins un noeud parmi une pluralité de noeuds d'accès au réseau (20) ; ledit équipement utilisateur (50) comprenant : une logique de détermination permettant de déterminer un ensemble de ladite pluralité de noeuds d'accès au réseau (20) avec lesquels une communication peut être établie ; une logique de calcul permettant de calculer, sur la base de signaux de diffusion reçus à partir de noeuds d'accès au réseau dans ledit ensemble, une indication d'une puissance d'émission d'un équipement utilisateur nécessaire pour une communication de trafic de données entre ledit équipement utilisateur (50) et chaque noeud d'accès au réseau (20) dans ledit ensemble ; et une logique de sélection permettant de sélectionner, sur la base de ladite indication calculée d'une puissance d'émission d'un équipement utilisateur nécessaire pour une communication de trafic de données entre ledit équipement utilisateur (50) et chaque noeud d'accès au réseau (20) dans ledit ensemble, une puissance d'émission d'un équipement utilisateur qui correspond à une valeur la plus grande desdites indications calculées.

Traditional UMTS Architecture

FIG. 1

FIG. 2

Initial Preamble Power

FIG. 3

Preamble Power Ramping

**EP 2 575 401 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009113934 A